# EUROPÄISCHE PATENTSCHRIFT

(11) **EP 1 133 344 B1**
(45) Veröffentlichungstag und Bekanntmachung des Hinweises auf die Patenterteilung: **27.11.2002**
(21) Anmeldenummer: 99957995.6
(22) Anmeldetag: 04.11.1999
(51) Int. Cl.: B01D 53/04, B01J 8/04, B01J 8/00

(54) **BEHÄLTER ZUR AUFNAHME VON KÖRNIGEM ABSORPTIONSMITTEL ZUR GASREINIGUNG**
CONTAINER FOR GRANULAR ADSORBENT FOR GAS PURIFICATION
CONTENANT DESTINE A LOGER UN MOYEN D'ADSORPTION EN GRAINS POUR LA PURIFICATION DE GAZ

(30) Priorität: 10.11.1998 DE 19851660
(43) Veröffentlichungstag der Anmeldung: 19.09.2001
(73) Patentinhaber: MG Technologies AG, 60325 Frankfurt am Main (DE)
(72) Erfinder: SCHUMM, Bruno, D-63110 Rodgau (DE); REICHERT, Bernd, D-61194 Niddatal (DE)
(74) Vertreter: Revesz, Veronika
(86) Internationale Anmeldenummer: EP9908453
(87) Internationale Veröffentlichungsnummer: WO00027504

(56) Entgegenhaltungen:
- US-A- 2 181 153
- US-A- 3 982 326

## Beschreibung

Die Erfindung betrifft einen Behälter zur Aufnahme von körnigem Adsorptionsmittel zur Gasreinigung, wobei der Behälter einen Gaseinlaß, eine von Adsorptionsmittel freie Gasverteilkammer, mindestens eine, von senkrechten, gasdurchlässigen Wänden begrenzte, eine Adsorptionsmittelschüttung enthaltende Adsorptionskammer, eine Ausströmkammer und einen Gasauslaß aufweist.

Adsorptionsmittelbehälter dieser Art sind bekannt und z.B. in EP-B-0158748 beschrieben. Der Erfindung liegt die Aufgabe zugrunde, den Behälter der eingangs genannten Art für Adsorptionsmittelschüttungen von mehreren Metern Höhe auszubilden und gleichzeitig dafür zu sorgen, daß Korrosion durch aggressive Gasbestandteile unterbleibt und die Temperaturen im Behälter bis auf etwa 200°C ansteigen können.

Die Aufgabe wird erfindungsgemäß dadurch gelöst, daß jede gasdurchlässige Wand aus horizontalen, im Abstand übereinander angeordneten Schienen aus Kunststoff besteht, durch die vertikale Zentrierstangen aus Kunststoff hindurchgeführt sind, wobei mindestens die Hälfte der Schienen und z. B. alle Schienen das Querschnittsprofil eines umgekehrten U aufweisen, daß im Behälter mindestens eine vertikale Stützwand angeordnet ist, welche die Adsorptionskammer teilt, wobei die gasdurchlässigen Wände an der Stützwand befestigt sind, und daß mindestens die Oberfläche der Stützwand aus Kunststoff besteht.

Bei Adsorbern dieser Art ist es wichtig, daß man die Wände genügend stabil ausbildet, weil das zwischen die Wände eingeschlossene Schüttgut aufgrund der beträchtlichen Höhe der Schüttung erhebliche Kräfte auf die Wände ausübt. Es wäre deshalb nicht ausreichend, die gasdurchlässigen Wände allein nur z. B. als siebartig gelochte Kunststoffplatten auszubilden, um Korrosionsfestigkeit zu erreichen, weil die Stabilität dieser Platten, insbesondere bei höheren Temperaturen bis etwa 200°C, nur gering sein kann. Der Aufbau der Wände aus Schienen mit U-Profil sorgt für hohe Stabilität. Der Druckverlust dieser gasdurchlässigen Wände kann ohne weiteres so gewählt werden, daß eine gleichmäßige Gasverteilung im Behälter erreicht wird. Alle Teile der Wände und vorzugsweise alle Einbauten im Behälter können aus glasfaserverstärktem Kunststoff gefertigt sein.

Die Höhe der Adsorptionsmittelschüttung ist ziemlich frei wählbar, sie liegt üblicherweise im Bereich von 2 bis 30 m und vorzugsweise 3 bis 25 m. Bei diesen Höhen werden eine oder auch mehrere vertikale Stützwände gebraucht, um die Breite der gasdurchlässigen Wände zu begrenzen und so ihre Festigkeit zu verbessern. Das Adsorptionsmittel kann z.B. ganz oder teilweise aus Aktivkohle, einem Aktivkohle-Inertstein-Gemisch oder Zeolithen bestehen.

Ausgestaltungsmöglichkeiten des Behälters werden mit Hilfe der Zeichnung erläutert. Es zeigt:
- Fig. 1: einen senkrechten Schnitt durch den Behälter, geschnitten nach der Linie I-I in Fig. 2,
- Fig. 2: einen horizontalen Schnitt durch den Behälter der Fig. 1, geschnitten nach der Linie II bis II in Fig. 1,
- Fig. 3: einen vergrößerten Ausschnitt aus Fig. 2.
- Fig. 4: einen senkrechten Schnitt nach der Linie IV-IV in Fig. 3 und
- Fig. 5: eine teilbare Wand in der Darstellung analog zu Fig. 4.

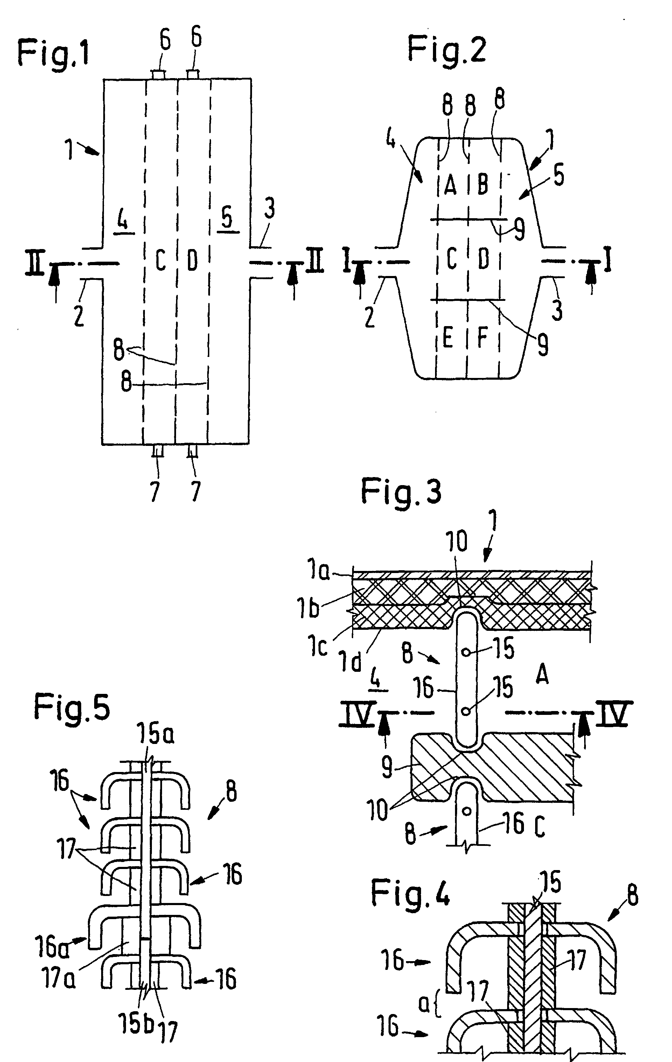

Der in der Zeichnung dargestellte Behälter zur Aufnahme von körnigem Adsorptionsmittel weist eine äußere Behälterwand (1) mit einem Gaseinlaß (2) und einem Gasauslaß (3) auf. Das durch den Einlaß (2) einströmende Gas gelangt zunächst in eine Gasverteilkammer (4), die von Adsorptionsmittel freigehalten ist. Das nicht dargestellte körnige Adsorptionsmittel befindet sich in Adsorptionskammern (A,B,C,D,E,F), wobei jede Kammer einen oberen Einfüllstutzen (6) und einen unteren Abzugsstutzen (7) aufweist. Jede Kammer weist gasdurchlässige Wände (8) auf, die an vertikalen Stützwänden (9) angeordnet sind. Die Stützwände (9) stehen senkrecht zu den gasdurchlässigen Wänden (8). Die Stützwände (9) können sowohl gasundurchlässig als auch gasdurchlässig ausgebildet sein. Der besseren Übersichtlichkeit wegen wurde in Fig. 1 die vertikale Stützwand (9) nicht dargestellt. Das zu behandelnde Gas, das vom Einlaß (2) kommt und etwa horizontal durch die Adsorptionskammern strömt, wo es mindestens teilweise von Schadstoffen befreit wird, gelangt zunächst in die von Adsorptionsmittel freie Ausströmkammer (5), bevor es den Behälter durch den Gasauslaß (3) verläßt.

Fig. 3 zeigt im Querschnitt die Außenwand des Behälters (1), die aus mehreren Schichten besteht, wobei alle Schichten ganz oder weitgehend aus Materialien auf Kunststoffbasis gebildet sein können. Für die wetterfeste Außenschicht (1a) kann man z.B. Kunstharze verwenden, es folgt eine wärmeisolierende Schicht (1b) z.B. aus Kunststoff oder Mineralfasermatten und eine mechanisch stabile Schicht (1c) z.B. aus glasfaserverstärktem Kunststoff. Die Innenseite (1d) der Wand (1) kann z.B. aus einem Kunstharz (Chemieschutzschicht) bestehen.

Die in Fig. 3 schematisch dargestellte gasdurchlässige Wand (8), die sich zwischen der Adsorptionskammer (A) und der Gasverteilkammer (4) befindet, weist von vertikalen Zentrierstangen (15) gehaltene Schienen (16) auf, vgl. Fig. 4. Das Querschnittsprofil der Schienen ist ein umgekehrtes U, so daß sie keine Flüssigkeiten aufnehmen können. Die Schienen werden von Stützhülsen (17), die eine der Zentrierstangen umgeben, im Abstand voneinander gehalten. Für das Gas ergibt sich so zwischen benachbarten Schienen (16) ein Abstandsspalt, dessen Breite a üblicherweise 1 bis 6 mm beträgt.

In Fig. 5 ist schematisch dargestellt, wie die Wand (8) aus Teilwänden aufgebaut und zerlegbar ist. Zur Vereinfachung wurden die in Fig. 4 verwendeten Schraffuren in Fig. 5 weggelassen. Gemäß Fig. 5 besteht die Zentrierstange aus der oberen Stange (15a) und der unteren Stange (15b), die in einer großen Hülse (17a) lösbar zusammengesteckt sind. Die Hülse (17a) ist mit der unteren Stange (15b) verbunden, nicht aber mit der oberen Stange (15a). Mit der oberen Stange (15a) ist eine Schiene (16a) verbunden, so daß diese Schiene (16a) und die darüber befindlichen Schienen (16) beim Hochziehen der Stange (15a) als Teilwand abgezogen werden. Eine Wand (8) kann auf diese Weise z. B. aus 3 bis 30 aufeinander gesetzten, voneinander lösbaren Teilwänden bestehen. Dies erleichtert die Montage und Demontage.

Die Stützwand (9) und auch die Behälterwand (1) weisen jeweils vertikale Nuten (10) auf, welche die Wand (8) halten. Die Wand kann zusätzlich in den Nuten eingeklemmt befestigt sein, was jedoch der besseren Übersichtlichkeit wegen in der Zeichnung nicht dargestellt ist. Die Anzahl der Adsorberkammern (A) bis (F) ist beliebig und liegt in der Praxis z.B. bei 2 bis 20, wobei man üblicherweise mit mehreren Stützwänden (9) arbeitet.

## Patentansprüche

1. Behälter zur Aufnahme von körnigem Adsorptionsmittel zur Gasreinigung, wobei der Behälter einen Gaseinlaß, eine von Adsorptionsmittel freie Gasverteilkammer, mindestens eine, von senkrechten, gasdurchlässigen Wänden begrenzte, eine Adsorptionsmittelschüttung enthaltende Adsorptionskammer, eine Ausströmkammer und einen Gasauslaß aufweist, **dadurch gekennzeichnet, daß** jede gasdurchlässige Wand aus horizontalen, im Abstand übereinander angeordneten Schienen aus Kunststoff besteht, durch die vertikale Zentrierstangen aus Kunststoff hindurchgeführt sind, wobei mindestens die Hälfte der Schienen das Querschnittsprofil eines umgekehrten U aufweisen, daß im Behälter mindestens eine vertikale Stützwand angeordnet ist, welche die Adsorptionskammer teilt, wobei die gasdurchlässigen Wände an der Stützwand befestigt sind und daß mindestens die Oberfläche der Stützwand aus Kunststoff besteht.

2. Behälter nach Anspruch 1, **dadurch gekennzeichnet, daß** die Stützwand Nuten aufweist, in welche die gasdurchlässigen Wände eingreifen.

3. Behälter nach Anspruch 1 oder 2, **dadurch gekennzeichnet, daß** die gasdurchlässigen Wände aus übereinander lösbar angeordneten Teilwänden besteht.

4. Behälter nach Anspruch 1 oder einem der folgenden, **dadurch gekennzeichnet, daß** die Schienen aus glasfaserverstärktem Kunststoff bestehen.

5. Behälter nach Anspruch 1 oder einem der folgenden, **dadurch gekennzeichnet, daß** die Wand des Behälters eine Schicht aus glasfaserverstärktem Kunststoff aufweist.

6. Behälter nach Anspruch 1 oder einem der folgenden, **dadurch gekennzeichnet, daß** die Adsorptionsmittelschüttung eine Höhe von 2 bis 30 Meter hat.

## Claims

1. A container for holding granular adsorbent for gas purification, the container having a gas inlet, a gas distribution chamber free of adsorbent, at least one adsorption chamber defined by perpendicular, gas-permeable walls and containing a bed of adsorbent, an outflow chamber and a gas outlet, **characterised in that** each gas-permeable wall consists of horizontal rails of plastics material arranged spaced apart one above another, through which vertical centring rods of plastics material are passed, at least half of the rails having the cross-sectional profile of an inverted U, that at least one vertical support wall which divides up the adsorption chamber is located in the container, the gas-permeable walls being fastened to the supporting wall, and that at least the surface of the supporting wall is made of plastics material.

2. A container according to Claim 1, **characterised in that** the supporting wall has grooves in which the gas-permeable walls engage.

3. A container according to Claim 1 or 2, **characterised in that** the gas-permeable walls consist of partial walls arranged detachably one above the other.

4. A container according to Claim 1 or one of the following claims, **characterised in that** the rails are made of glass-fibre-reinforced plastics material.

5. A container according to Claim 1 or one of the following claims, **characterised in that** the wall of the container has a layer of glass-fibre-reinforced plastics material.

6. A container according to Claim 1 or one of the following claims, **characterised in that** the bed of adsorbent has a height of 2 to 30 metres.

## Revendications

1. Contenant de réception d'agent d'adsorption en grains pour l'épuration des gaz, le contenant ayant une entrée pour les gaz, une chambre de répartition des gaz exempte d'agent d'adsorption, au moins une chambre d'adsorption délimitée par des parois verticales et perméables aux gaz et contenant un amas d'agent d'adsorption, une chambre de sortie et une sortie pour les gaz, **caractérisé en ce que** chaque paroi perméable aux gaz est constituée de barres horizontales en matière plastique disposées à distance les unes au-dessus des autres et traversées par des montants verticaux de centrage en matière plastique, au moins la moitié des barres ayant le profil en section transversale d'un U inversé, **en ce qu'**il est prévu dans le contenant au moins une paroi verticale d'appui qui subdivise la chambre d'adsorption, les parois perméables aux gaz étant fixées à la paroi d'appui et **en ce qu'**au moins la surface de la paroi d'appui est en matière plastique.

2. Contenant suivant la revendication 1, **caractérisé en ce que** la paroi d'appui comporte des gorges dans lesquelles pénètrent les parois perméables aux gaz.

3. Contenant suivant la revendication 1 ou 2, **caractérisé en ce que** les parois perméables aux gaz sont constituées de sous-parois montées de manière amovible les unes au-dessus des autres.

4. Contenant suivant la revendication 1 ou l'une des suivantes, **caractérisé en ce que** les barres sont en matière plastique renforcée par de la fibre de verre.

5. Contenant suivant la revendication 1 ou l'une des suivantes, **caractérisé en ce que** la paroi du contenant comporte une couche en matière plastique renforcée par de la fibre de verre.

6. Contenant suivant la revendication 1 ou l'une des suivantes, **caractérisé en ce que** l'amas d'agent d'adsorption a une hauteur de 2 à 30 mètres.
